## Europäisches Patentamt

## European Patent Office

## Office européen des brevets

(19)

(11) Veröffentlichungsnummer: **0 244 591**
**B1**

(12) **EUROPÄISCHE PATENTSCHRIFT**

(45) Veröffentlichungstag der Patentschrift:
**25.07.90**

(51) Int. Cl.⁵: **B29C 47/36, B29C 47/74**
**// B29K105:04**

(21) Anmeldenummer: **87103243.9**

(22) Anmeldetag: **06.03.87**

(54) **Strangpressvorrichtung zum Herstellen von Kunststoffschmelzemischungen.**

(30) Priorität: **09.05.86 DE 3615586**

(43) Veröffentlichungstag der Anmeldung:
**11.11.87 Patentblatt 87/46**

(45) Bekanntmachung des Hinweises auf die Patenterteilung:
**25.07.90 Patentblatt 90/30**

(84) Benannte Vertragsstaaten:
**AT DE FR GB IT NL SE**

(56) Entgegenhaltungen:
**EP-A- 117 720**
**FR-A- 2 317 070**
**US-A- 2 692 405**
**US-A- 4 182 601**
**US-A- 4 259 277**
**US-A- 4 431 311**
**US-A- 4 436 679**

**Patent Abstracts of Japan, Band 5,**
**Nr. 93 (M-74)(765), 17. Juni 1981, JP-A-5640534**
**Patent Abstracts of Japan, Band 10,**
**Nr. 134 (M-479)(2191), 17. Mai 1986, JP-A-60259426**

(73) Patentinhaber: **HERMANN BERSTORFF Maschinenbau GmbH, An der Breiten Wiese 3/5,
D-3000 Hannover 61(DE)**

(72) Erfinder: **Kolossow, Klaus-Dieter, Oldauer Heuweg 24,
D-3107 Hambühren II(DE)**

## Beschreibung

Die Erfindung betrifft eine Strangpreßvorrichtung zum Herstellen von Kunststoffschmelzemischungen der Gattung, wie beschrieben im Oberbegriff des Patentanspruchs.

Eine derartige Strangpreßvorrichtung ist bekannt aus der US-PS 4,431,311 (Fig. 2) der Anmelderin. Jeweils vor einem auf der Extrusionsschnecke angeordneten Rückstauelement ist eine Materialauslaßöffnung angeordnet, die über eine Verbindungsleitung in ein statisches Mischelement führt. Dem statischen Mischelement ist wiederum über eine Verbindungsleitung eine Zahnradpumpe nachgeordnet und nach Passieren eines weiteren statischen Mischelementes gelangt die Kunststoffschmelzemischung durch eine Einlaßöffnung erneut in den Hohlzylinder der Strangpresse.

Eine derartige Anordnung der Zahnradpumpe hat viele Nachteile, wobei insbesondere die langen Umlenkwege der Kunststoffmischung von der Auslaßöffnung aus dem Hohlzylinder durch Leitungsstücke zum statischen Mischteil und von diesem erneut durch Leitungsstücke in die Zahnradpumpe von großem Nachteil sind. Diese Nachteile werden durch Ablagerungen in diesen Umlenkkanälen und Einrichtungen verursacht.

Auf der anderen Seite ist die Anordnung einer Zahnradpumpe für einen höheren und gleichmäßigen Druckaufbau des geförderten Materialstromes von großem Vorteil, weil eine sehr gleichmäßige Ausdüsung der Kunststoffmischung dadurch sichergestellt werden kann.

Es ist die Aufgabe der Erfindung, eine Strangpreßvorrichtung für Thermoplaste zu verbessern. Insbesondere soll die Strangpreßvorrichtung eine gute Durchmischung der verarbeiteten Bestandteile bei einer Verringerung der Schneckenlänge und einer Reduzierung der Mischteile sicherstellen.

Die Aufgabe wird durch die Lehre niedergelegt im kennzeichnenden Teil des Patentanspruchs gelöst.

Durch die Anordnung der Zahnradpumpe quer zur Längsmittelachse des Hohlzylinders bei gleichzeitiger Anordnung der Einlaß- und Auslaßöffnung für die Kunststoffschmelze jeweils an der Unterseite des Pumpengehäuses im Zwickelbereich vor und hinter den Pumpenrädern, wird die angesaugte bzw. abgestoßene Kunststoffschmelze einer zweimaligen 90° Umlenkung unterworfen, nämlich einmal am Eingang in das Pumpengehäuse und an deren Ausgang.

Durch diese Maßnahme wird die innige Vermischung der Kunststoffschmelze mit ihren Zusätzen, wie z.B. dem Treibmittel stark begünstigt, ohne daß statische Mischeinrichtungen erforderlich sind, wie beschrieben in der eingangs erwähnten US-Patentschrift.

Insbesondere ist jedoch hervorzuheben, daß mit einem Minimum an Bauteilen in den Schmelzestrom eine Zahnradpumpe eingebaut werden kann, wobei eine verbesserte Mischwirkung und ein gleichmäßiger Schmelzedruck am Auspreßwerkzeug erreicht wird, weil auf lange druckverbrauchende Umlenkkanäle usw. verzichtet werden kann.

Durch die waagerechte Anordnung der Stirnflächen der Pumpenräder zur Längsmittelachse des Hohlzylinder der Strangpresse in Verbindung mit der Anordnung der Einlaß- und Auslaßöffnung, jeweils im Zwickelbereich vor und hinter den Zahnrädern, erfolgt die zweimalige 90° Umlenkung des Schmelzestromes in dem Pumpengehäuse. Die Schmelze prallt nach dem Eintritt in das Pumpengehäuse zunächst gegen die obere Innenwandung des Gehäuses, wird von den Zahnrädern erfaßt und an der jeweiligen Außenwand des Pumpengehäuses entlang gefördert. Dann prallt der Schmelzestrom mit dem Schmelzestrom des gegenüberliegenden Pumpenrades zusammen und vermischt sich erneut, um anschließend nach einer weiteren 90° Umlenkung durch die Auslaßöffnung an der Unterseite des Pumpengehäuses in den Hohlzylinder der Strangpresse gepreßt zu werden.

Als Ergebnis dieses Vorganges bzw. der Anordnung der Bauteile wird eine ausgezeichnete Vermischung der Kunststoffschmelze mit ihren Zusätzen bzw. einem Treibmittel erreicht, so daß die Länge der Aufschmelz- und Homogenisierschnecken merklich verringert und mit weniger Mischteilen auf der Schnecke gearbeitet werden kann.

Ein Ausführungsbeispiels der Erfindung wird anhand der Zeichnungen erläutert. Es zeigen:

Fig. 1 einen Längsschnitt durch eine Strangpresse.

Fig. 2 einen Längsschnitt durch eine Strangpresse mit darauf querangeordneter Zahnradpumpe.

Fig. 3 eine teilweise Draufsicht als Längsschnitt gemäß der Linie III-III in Fig. 1, jedoch um 90° gedreht.

Fig. 4 einen teilweisen Längsschnitt gemäß Linie IV-IV in Fig. 3.

In dem Hohlzylinder 1 der Schneckenstrangpresse rotiert die Schnecke 2, die durch eine nicht dargestellte Antriebseinheit in Drehbewegung gesetzt wird und den Schmelzestrom in Richtung des Pfeiles 3 fördert.

Auf der Schnecke 2 ist eine Stauscheibe 4 angeordnet. Vor der Stauscheibe 4 weist der Hohlzylinder eine Auslaßöffnung 5 und hinter der Stauscheibe 4 eine Einlaßöffnung 6 auf.

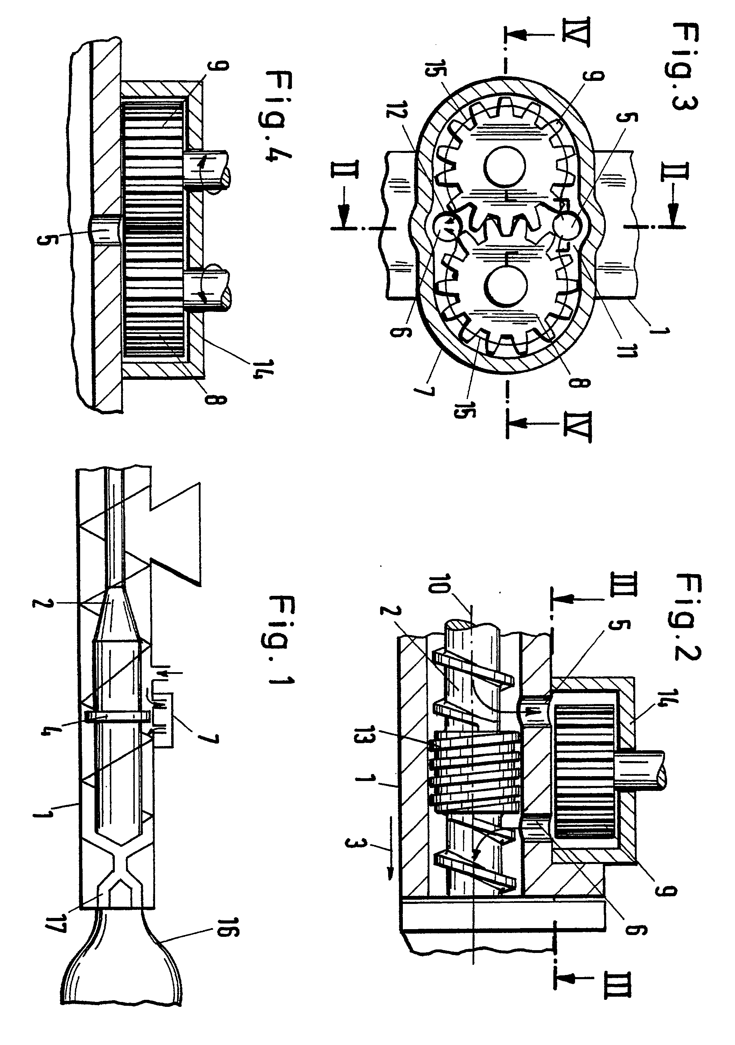

Auf dem Hohlzylinder 1 ist eine Zahnradpumpe 7, durch nicht dargestellte Flansche, festgeschraubt, und zwar mit den beiden Pumpenrädern 8 und 9 quer zur Längsmittelachse 10 des Hohlzylinders 1 (siehe Fig. 3).

Die Einlaß- und die Auslaßöffnung 5 und 6 in dem Hohlzylinder 1 münden jeweils direkt in die Zahnradpumpe 7, und zwar jeweils in den Zwickelbereichen 11 und 12 vor bzw. hinter den Pumpenrädern 8 und 9.

In Fig. 2 wird eine Ausführungsform gezeigt mit einem Rückfördergewindeabschnitt 13 auf der Förderschnecke 2, und zwar angeordnet zwischen der Auslaßöffnung 5 und der Einlaßöffnung 6. Durch das Rückfördergewinde wird die Kunststoffschmelze zurückgestaut und unter verstärktem Druck in die Auslaßöffnung 5 und somit in die Zahnradpumpe 7 gefördert.

Die in der Zahnradpumpe 7 angekommene Schmelze gelangt in dem Zwickelbereich 11 und prallt gegen den Deckel 14 der Pumpe 7.

Dann wird die Schmelze von den Pumpenrädern 8 und 9 erfaßt und an der Außenwandung der Pumpe entlang gefördert, wie dargestellt durch Pfeile 15.

In dem gegenüberliegenden Zwickelbereich 12 wird die Schmelze durch die schnelle Umdrehung der Zahnräder 8 und 9 gegeneinander geschleudert, wodurch erneut eine gute Vermischung erfolgt.

Anschließend wird die Schmelze unter einer 90° Umlenkung in die Einlaßöffnung 6 gepreßt und in den, dem Rückfördergewindeabschnitt 13 nachgeordneten Schneckenabschnitt gefördert und danach zu einer Schlauchfolie 16 aus dem Werkzeug 17 extrudiert.

## Patentansprüche

1. Strangpreßvorrichtung zum Herstellen von Kunststoffschmelzemischungen, insbesondere von mit Treibmittel vermischten Thermoplasten für das Herstellen von extrudierten Schaumhalbzeugen, mit einer in einem Hohlzylinder (1) rotierenden Schnecke (2), mit Einfüllöffnungen für Kunststoffe und andere Komponenten, mit auf der Schnecke angeordneten Stauelementen (4, 13), wobei in Arbeitsrichtung vor und hinter einem Stauelement eine Auslaß- und Einlaßöffnung (5, 6) in dem Hohlzylinder für die Kunststoffschmelze und eine beide Öffnungen verbindende Zahnradpumpe (7) vorgesehen wird, dadurch gekennzeichnet, daß die Zahnradpumpe (7) quer zur Längsmittelachse (10) des Hohlzylinders (1) und unmittelbar darauf angeordnet ist, und
daß die Materialeinlaß- und -auslaßöffnung (5,6) im Hohlzylinder (1) für die Kunststoffschmelze an der Unterseite des Gehäuses der Zahnradpumpe (7) jeweils im Zwickelbereich (11, 12) vor und hinter den Pumpenrädern (8, 9) mündend angeordnet sind, und daß die Stirnflächen der Pumpenräder (8, 9) im Gehäuse der Zahnradpumpe (7) waagerecht zur Längsmittelachse (10) des Hohlzylinders (1) angeordnet sind.

## Claims

Extrusion apparatus for the production of mixtures of molten synthetic material, more especially thermoplastic materials mixed with a propellant for the production of extruded, semi-finished foamed materials, the apparatus comprising a screw (2) which rotates in a hollow cylinder (1), feed apertures for synthetic materials and other components, and flow obstruction means (4, 13) which are disposed on the screw, and outlet aperture and an inlet aperture (5, 6) being provided in the hollow cylinder for the molten synthetic material upstream and downstream of a flow obstruction means when viewed in the operating direction, and a gear pump (7) is provided which connects both apertures, characterised in that the gear pump (7) is disposed at right angles to, and directly on, the central longitudinal axis (10) of the hollow cylinder (1), and in that the material inlet and outlet apertures (5, 6) are provided in the hollow cylinder (1) for the molten synthetic material on the underside of the housing of the gear pump (7) so as to extend in the respective nip region (11, 12) upstream and downstream of the pump wheels (8, 9), and in that the end faces of the pump wheels (8, 9) are disposed in the housing of the gear pump (7) in a horizontal manner relative to the central longitudinal axis (10) of the hollow cylinder (1).

## Revendications

Dispositif d'extrusion pour la production de mélanges fondus de matière plastique, notamment de matières thermoplastiques mélangées à de l'agent porogène, pour la préparation de demi-produits alvéolaires extrudés, comprenant une vis (2) tournant dans un fourreau (1), des orifices de chargement de la matière plastique et d'autres constituants, des éléments de retenue (4, 13) montés sur la vis, un orifice de sortie (5) de la matière plastique du fourreau et un orifice d'entrée (6) de la matière plastique dans le fourreau étant prévus en amont et en aval dans la direction de fonctionnement d'un élément de retenue, et une pompe à engrenages (7) mettant en communication les deux orifices, caractérisé, en ce que la pompe à engrenages (7) est montée transversalement à l'axe médian longitudinal (10) du fourreau (1) et directement sur celui-ci, et en ce que l'orifice d'entrée (5) de la matière plastique fondue dans le fourreau (1) et de sortie (6) de la matière plastique fondue du fourreau (1) sont disposés du côté inférieur du corps de la pompe à engrenages (7), de manière à déboucher dans la région cunéiforme (11, 12) en amont et en aval des roues de la pompe (8, 9), et en ce que les surfaces frontales des roues de la pompe (8, 9) sont disposées, dans le corps de la pompe à engrenages (7), horizontalement par rapport à l'axe longitudinal médian (10) du fourreau (1).

Fig.1

Fig.2

Fig.3

Fig.4